(19) Europäisches Patentamt
European Patent Office
Office européen des brevets

(11) **EP 4 700 422 A1**

(12) **EUROPEAN PATENT APPLICATION**
published in accordance with Art. 153(4) EPC

(43) Date of publication:
**25.02.2026 Bulletin 2026/09**

(21) Application number: 24792488.9

(22) Date of filing: **02.04.2024**

(51) International Patent Classification (IPC):
**G01S 5/14** (2006.01)     **G06F 3/0346** (2013.01)
**G06N 20/00** (2019.01)

(52) Cooperative Patent Classification (CPC):
**G01S 5/14; G06F 3/0346; G06N 20/00**

(86) International application number:
**PCT/JP2024/013545**

(87) International publication number:
**WO 2024/219212 (24.10.2024 Gazette 2024/43)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **19.04.2023   JP 2023068245**

(71) Applicant: **Sony Group Corporation
Tokyo 108-0075 (JP)**

(72) Inventors:
• **SATO Tetsuro
Tokyo 108-0075 (JP)**
• **KAMATA Hiroyuki
Tokyo 108-0075 (JP)**

(74) Representative: **MFG Patentanwälte
Meyer-Wildhagen Meggle-Freund
Gerhard PartG mbB
Amalienstraße 62
80799 München (DE)**

(54) **PROGRAM, INFORMATION PROCESSING DEVICE, AND INFORMATION PROCESSING METHOD**

(57)     The present disclosure relates to a program, an information processing apparatus, and an information processing method capable of measuring, with high accuracy, the position of an electronic device in a system, the system including a plurality of devices each including a speaker and the electronic device including a microphone.

A distance measurement signal including a spreading code signal obtained by performing spread spectrum modulation on a spreading code and output from a plurality of audio output blocks existing at a known position is received, and a position of the distance measurement signal receiving unit is inferred by machine learning on the basis of a pseudo distance to a plurality of distance measurement signal output blocks specified from a transmission time that is a time until the distance measurement signals of the plurality of distance measurement signal output blocks are transmitted to and received by the distance measurement signal receiving unit, and known positions of the plurality of distance measurement signal output blocks. The present disclosure is applicable to game controllers and HMDs.

*FIG. 3*

EP 4 700 422 A1

## Description

TECHNICAL FIELD

The present disclosure relates to a program, an information processing apparatus, and an information processing method, and more particularly, to a program, an information processing apparatus, and an information processing method capable of realizing position measurement using transmission and reception of a modulated signal with high accuracy by machine learning.

BACKGROUND ART

There has been proposed a technique of realizing position measurement of a reception device based on a distance between devices obtained from a transmission/reception time when modulated signals transmitted from a plurality of transmission devices are received by the reception device by machine learning using actual environment data (see Non-Patent Document 1).

CITATION LIST

NON-PATENT DOCUMENT

Non-Patent Document 1: Improving GNSS Positioning Using Neural-Network-Based Corrections

SUMMARY OF THE INVENTION

PROBLEMS TO BE SOLVED BY THE INVENTION

In the technique described in Non-Patent Document 1, in order to improve the accuracy of position measurement in machine learning, it is necessary to collect a large amount of actual environment data satisfying various conditions and then perform machine learning using the collected actual environment data.

However, it takes time and effort to collect a large amount of actual environment data satisfying various conditions, and there is actual environment data that is difficult to collect depending on the conditions. Therefore, position measurement using machine learning cannot easily improve accuracy.

Furthermore, as a data set in place of the actual environment data, for example, it is conceivable to realize machine learning by creating an inter-device distance obtained from the transmission/reception time of the modulation signal by simulation and generating a data set combined with the inter-device distance.

However, in order to realize a precise simulation according to the communication environment of the modulated signal, for example, a complicated and laborious data set in consideration of all influences such as communication shielding and reflection by an object existing in the communication environment is required, and thus, the accuracy cannot be easily improved.

The present disclosure has been made in view of such a situation, and particularly, an object of the present disclosure is to easily improve accuracy of position measurement by machine learning using a distance between devices obtained from a transmission/reception time when modulated signals transmitted from a plurality of transmission devices are received by a reception device.

SOLUTIONS TO PROBLEMS

An information processing apparatus and a program according to one aspect of the present disclosure are an information processing apparatus and a program including: a distance measurement signal receiving unit that receives a distance measurement signal including a spreading code signal obtained by performing spread spectrum modulation on a spreading code and output from a plurality of distance measurement signal output blocks existing at known positions; and a position inference unit that infers a position of the distance measurement signal receiving unit by machine learning on the basis of a pseudo distance to the plurality of distance measurement signal output blocks specified from a transmission time that is a time until the distance measurement signals of the plurality of distance measurement signal output blocks are transmitted to and received by the distance measurement signal receiving unit, and known positions of the plurality of distance measurement signal output blocks.

An information processing method according to one aspect of the present disclosure is an information processing method of an information processing apparatus, the information processing apparatus including: a distance measurement signal receiving unit that receives a distance measurement signal including a spreading code signal obtained by performing spread spectrum modulation on a spreading code and output from a plurality of distance measurement signal output blocks existing at known positions; and a position inference unit that infers a position of the distance measurement signal receiving unit by machine learning on the basis of a pseudo distance to the plurality of distance measurement signal output blocks specified from a transmission time that is a time until the distance measurement signals of the plurality of distance measurement signal output blocks are transmitted to and received by the distance measurement signal receiving unit, and known positions of the plurality of distance measurement signal output blocks, the information processing method including a step of, by the position inference unit, inferring the position of the distance measurement signal receiving unit by the machine learning on the basis of the pseudo distance and the known positions of the plurality of distance measurement signal output blocks.

In one aspect of the present disclosure, by a distance measurement signal receiving unit, a distance measurement signal including a spreading code signal obtained by performing spread spectrum modulation on a spreading code and output from a plurality of distance measurement signal output blocks existing at a known position is received, and a position of the distance measurement signal receiving unit is inferred by machine learning on the basis of a pseudo distance to a plurality of distance measurement signal output blocks specified from a transmission time that is a time until the distance measurement signals of the plurality of distance measurement signal output blocks are transmitted to and received by the distance measurement signal receiving unit, and known positions of the plurality of distance measurement signal output blocks

BRIEF DESCRIPTION OF DRAWINGS

Fig. 1 is a diagram for explaining a configuration example of an acoustic positioning system of the present disclosure.
Fig. 2 is a diagram for explaining functions implemented by an audio output block of Fig. 1.
Fig. 3 is a diagram for explaining functions implemented by an electronic device of Fig. 1.
Fig. 4 is a diagram for explaining communication using a spreading code.
Fig. 5 is a diagram for explaining autocorrelation and cross-correlation of a spreading code.
Fig. 6 is a diagram for explaining transmission time of a spreading code using cross-correlation.
Fig. 7 is a diagram for explaining a configuration example of a transmission time calculation unit.
Fig. 8 is a diagram for explaining a method of obtaining a position of an electronic device using an analytical method.
Fig. 9 is a diagram for explaining how to obtain the position of the electronic device of the present disclosure.
Fig. 10 is a diagram for explaining functions implemented by a learning device of a position inference unit of Fig. 1.
Fig. 11 is a flowchart illustrating position inference unit learning processing by the learning device of Fig. 10.
Fig. 12 is a flowchart illustrating position measurement processing by the electronic device.
Fig. 13 is a flowchart illustrating position measurement processing by an audio output block.
Fig. 14 is a flowchart illustrating transmission time calculation processing.
Fig. 15 illustrates a configuration example of a general-purpose computer.

MODE FOR CARRYING OUT THE INVENTION

Hereinafter, a preferred embodiment of the present disclosure will be described in detail with reference to the accompanying drawings. Note that, in the present specification and drawings, constituent elements having substantially the same functional configuration are denoted by the same reference signs, and redundant description is omitted.

Hereinafter, modes for carrying out the present technology will be described. The description will be given in the following order.

1. Preferred embodiment
2. Example executed by software

<<1. Preferred embodiment>>

<Configuration example of acoustic positioning system>

In particular, the present disclosure makes it possible to easily improve accuracy of position measurement by machine learning based on a distance between devices obtained from a transmission/reception time when modulated signals transmitted from a plurality of transmission devices are received by a reception device.

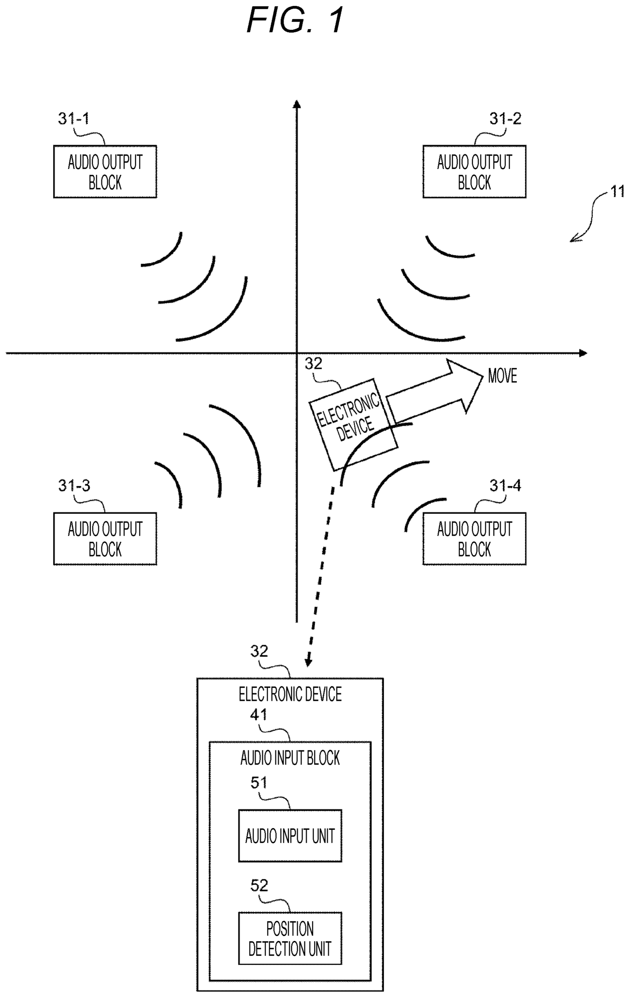

Fig. 1 illustrates a configuration example of an acoustic positioning system to which the technology of the present disclosure is applied.

An acoustic positioning system 11 of Fig. 1 includes audio output blocks 31-1 to 31-4 and an electronic device 32. Note that, hereinafter, in a case where it is not necessary to particularly distinguish the audio output blocks 31-1 to 31-4 from each other, they are simply referred to as the audio output block 31, and other configurations are also referred to in a similar manner.

Each of the audio output blocks 31-1 to 31-4 includes a speaker, and emits sound by including, in sound such as a music content, a game, or known music, an audio signal as a ranging signal including a modulated signal obtained by performing spread spectrum modulation on a data code for specifying the position of the electronic device 32 using a spreading code.

The electronic device 32 is carried or worn by the user, and is, for example, a smartphone or a head mounted display (HMD) used as a game controller.

The electronic device 32 includes an audio input block 41 including an audio input unit 51 such as a microphone that receives audio including the audio signal as the ranging signal emitted from each of the audio output blocks 31-1 to 31-4, and a position detection unit 52.

The audio input block 41 recognizes in advance the position in the space of each of the audio output blocks 31-1 to 31-4 as known position information through communication (the ranging signal or another communication means) between the audio output block 31 and the electronic device 32. The audio input block 41 causes the audio input unit 51 to receive the audio signal as the ranging signal including the modulated signal included in the audio emitted from the audio output block 31, and outputs the audio signal to the position detection unit 52. The position detection unit 52 obtains a distance to each of the audio output blocks 31-1 to 31-4 on the basis of the audio signal as the ranging signal including the modulated signal supplied from the audio input block 41, and detects its own position relative to the audio output blocks 31-1 to 31-4 on the basis of the obtained distances.

With this configuration, in a case where the electronic device 32 is, for example, an HMD including a see-through display unit or a smartphone, it is possible to track the movement of the head of the user wearing the HMD or the smartphone, which is the electronic device 32.

Furthermore, since the position of the HMD or the smartphone, which is the electronic device 32, relative to the audio output blocks 31-1 to 31-4 is identified, the audio output from the audio output blocks 31-1 to 31-4 can be output with sound field localization corrected in accordance with the specified position. This configuration allows the user wearing the HMD, which is the electronic device 32, to experience sound with realistic feeling according to the movement of the head.

<Functional configuration example of audio output block>

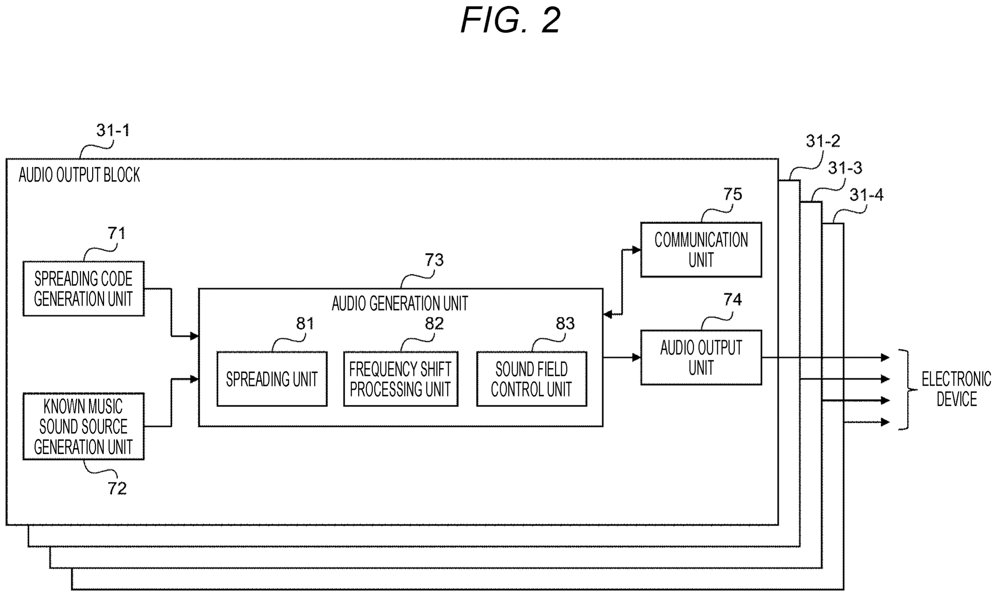

Next, functions implemented by the audio output block 31 will be described with reference to Fig. 2.

The audio output block 31 includes a spreading code generation unit 71, a known music sound source generation unit 72, an audio generation unit 73, an audio output unit 74, and a communication unit 75.

The spreading code generation unit 71 generates a spreading code and outputs the spreading code to the audio generation unit 73.

The known music sound source generation unit 72 stores known music, generates a known music sound source on the basis of the stored known music, and outputs the known music sound source to the audio generation unit 73.

The audio generation unit 73 applies spread spectrum modulation using a spreading code to the known music sound source to generate audio including a spread spectrum signal, and outputs the audio to the audio output unit 74.

More specifically, the audio generation unit 73 includes a spreading unit 81, a frequency shift processing unit 82, and a sound field control unit 83.

The spreading unit 81 applies spread spectrum modulation using a spreading code to the known music sound source to generate a spread spectrum signal.

The frequency shift processing unit 82 shifts the frequency of the spreading code in the spread spectrum signal to a frequency band according to the band characteristics of the audio output unit 74.

On the basis of information regarding the position of the electronic device 32 supplied from the electronic device 32, the sound field control unit 83 reproduces the sound field according to the positional relationship with itself.

The audio output unit 74 is, for example, a speaker, and outputs the known music sound source supplied from the audio generation unit 73 and audio based on the spread spectrum signal.

The communication unit 75 is controlled by the audio generation unit 73, communicates with the electronic device 32 via Wi-Fi communication, Bluetooth (registered trademark) communication, or the like, and receives a request for sound emission to measure the position supplied from the electronic device 32. Furthermore, the communication unit 75 transmits its own position information to the electronic device 32 at a timing before emitting a sound.

<Configuration example of electronic device>

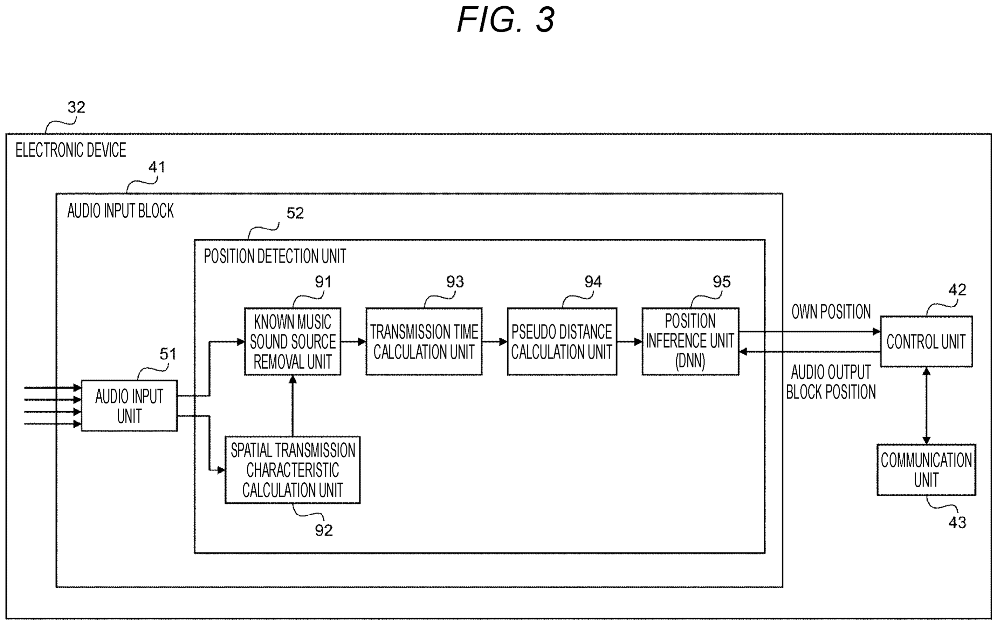

Next, a configuration example of the electronic device 32 will be described with reference to Fig. 3.

The electronic device 32 includes the audio input block 41, a control unit 42, and a communication unit 43.

The audio input block 41 receives input of audio emitted from each of the audio output blocks 31-1 to 31-4, obtains a distance to each of the audio output blocks 31-1 to 31-4 on the basis of the correlation between the spread spectrum signal and the spreading code of the received audio, obtains its own position on the basis of the obtained distance, and outputs its own position to the control unit 42.

In a case where the electronic device 32 is a smartphone that functions as a game controller, the control unit 42 controls, for example, the communication unit 43 on the basis of the position of the electronic device 32 supplied from the audio input block 41 to transmit a command for setting a sound field based on the position of the electronic device 32 to the audio output blocks 31-1 to 31-4.

In this case, the sound field control unit 83 of each of the audio output blocks 31-1 to 31-4 adjusts the audio output from the audio output unit 74 on the basis of the command for setting a sound field transmitted by the electronic device 32 to achieve the optimum sound field for the user possessing the electronic device 32.

The audio input unit 51 is, for example, a microphone, and collects audio emitted from each of the audio output blocks 31-1 to 31-4 and outputs the audio to the position detection unit 52.

The position detection unit 52 detects its own position on the basis of the audio emitted from each of the audio output blocks 31-1 to 31-4 and outputs its own position to the control unit 42.

More specifically, the position detection unit 52 includes a known music sound source removal unit 91, a spatial transmission characteristic calculation unit 92, a transmission time calculation unit 93, a pseudo distance calculation unit 94, and a position inference unit 95.

The spatial transmission characteristic calculation unit 92 calculates the spatial transmission characteristic on the basis of information regarding the audio supplied from the audio input unit 51, the characteristic of the microphone constituting the audio input unit 51, and the characteristic of the speaker constituting the audio output unit 74 of the audio output block 31, and outputs the spatial transmission characteristic to the known music sound source removal unit 91.

The known music sound source removal unit 91 stores a music sound source that is stored in advance in the known music sound source generation unit 72 of the audio output block 31 as a known music sound source.

Then, the known music sound source removal unit 91 removes the component of the known music sound source from the audio supplied from the audio input unit 51 in consideration of the spatial transmission characteristic supplied from the spatial transmission characteristic calculation unit 92, and outputs the result to the transmission time calculation unit 93.

That is, the known music sound source removal unit 91 removes the component of the known music sound source from the audio collected by the audio input unit 51, and outputs only the spread spectrum signal component to the transmission time calculation unit 93.

The transmission time calculation unit 93 calculates a transmission time from emission of audio from each of the audio output blocks 31-1 to 31-4 to collection of audio on the basis of a spread spectrum signal component included in audio collected by the audio input unit 51, and outputs the transmission time to the pseudo distance calculation unit 94.

Note that the method for calculating the transmission time will be described later in detail.

The pseudo distance calculation unit 94 calculates a pseudo distance between the electronic device 32 and each of the audio output blocks 31-1 to 31-4 on the basis of the transmission time of each of the audio output blocks 31-1 to 31-4 supplied from the transmission time calculation unit 93, and outputs the pseudo distance to the position inference unit 95.

The position inference unit 95 is, for example, an inference unit including a deep neural network (DNN) on which machine learning described later is performed, and inferred the position of the electronic device 32 on the basis of the pseudo distances of the electronic device 32 and the audio output blocks 31-1 to 31-4 supplied from the pseudo distance calculation unit 94 and the positions of the audio output blocks 31-1 to 31-4 acquired in advance, and outputs the position to the control unit 42.

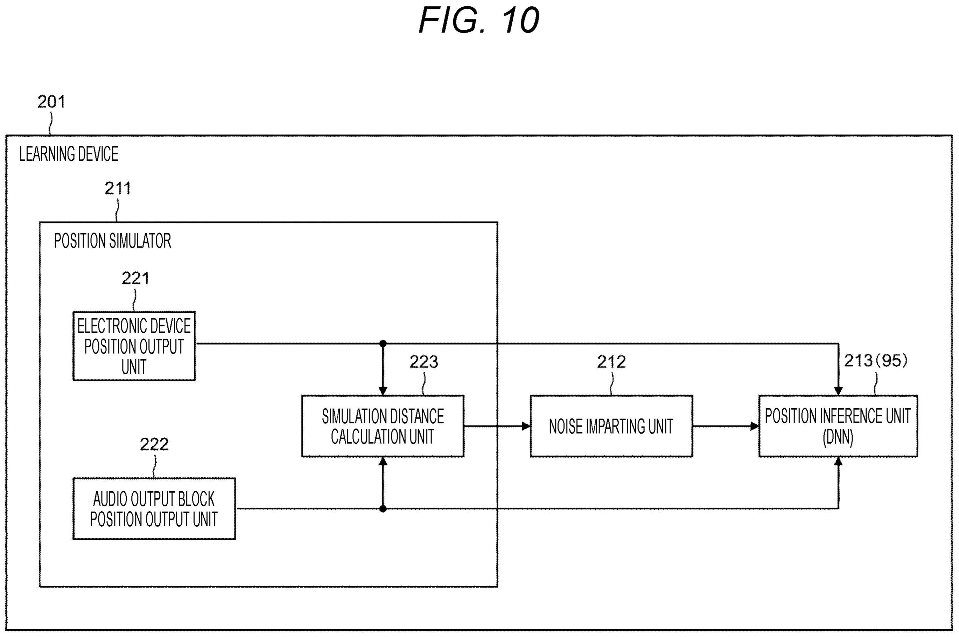

Note that a learning device 201 (Fig. 10) that causes the position inference unit 95 to perform machine learning will be described later in detail with reference to Fig. 10.

When starting its own position measurement processing, the control unit 42 communicates with the audio output block 31, acquires respective position information, and outputs the position information to the position inference unit 95.

<Principle of communication using spreading code>

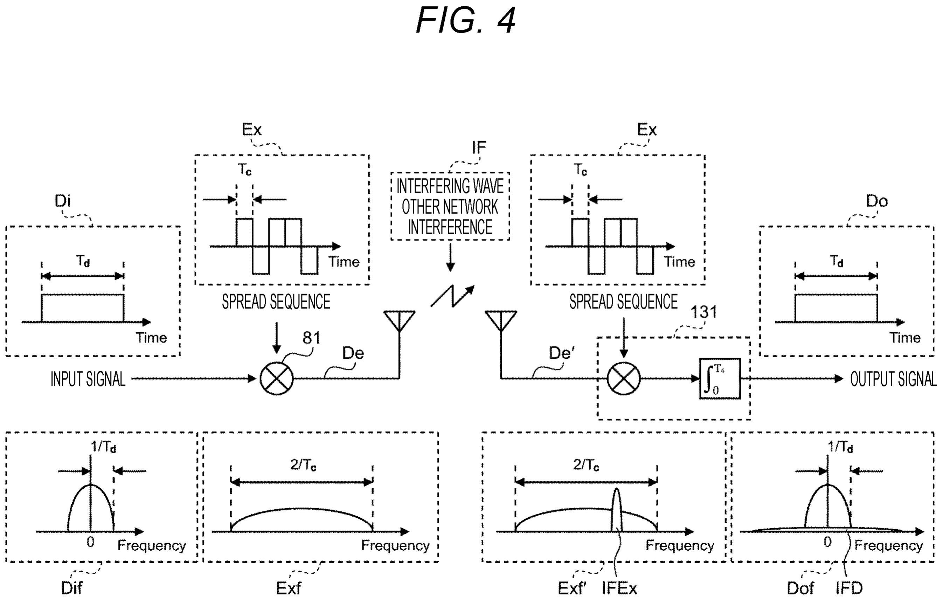

Next, the principle of communication using a spreading code will be described with reference to Fig. 4.

On the transmission side in the left part of the drawing, the spreading unit 81 performs spread spectrum modulation by multiplying an input signal Di having a pulse width Td to be transmitted by a spreading code Ex to generate a transmission signal De having a pulse width Tc and transmits the transmission signal De to the reception side in the right part of the drawing.

At this time, in a case where a frequency band Dif of the input signal Di is indicated by, for example, frequency bands -1/Td to 1/Td, a frequency band Exf of the transmission signal De is widened by being multiplied by the spreading code Ex to be frequency bands -1/Tc to 1/Tc (1/Tc > 1/Td), spreading the energy across the frequency axis.

Note that Fig. 4 illustrates an example in which the transmission signal De is interfered by the interfering wave IF.

On the reception side, the transmission signal De interfered by the interfering wave IF is received as a reception signal De'.

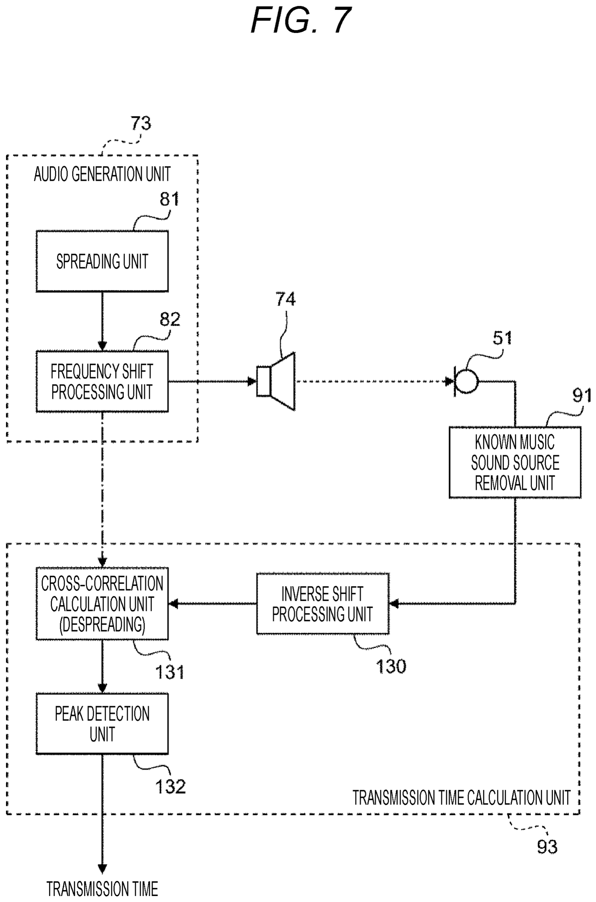

(The cross-correlation calculation unit 131 (Fig. 7) of) the transmission time calculation unit 93 restores the reception signal Do by applying despreading to the reception signal De' by the same spreading code Ex.

At this time, a frequency band Exf' of the reception signal De' includes a component IFEx of the interfering wave, but in a frequency band Dof of the despread reception signal Do, energy is spread by restoring the component IFEx of the interfering wave as a spread frequency band IFD, so that the influence of the interfering wave IF on the reception signal Do can be reduced.

That is, as described above, in communication using the spreading code, it is possible to reduce the influence of the interfering wave IF generated on the transmission path of the transmission signal De, and it is possible to improve noise resistance.

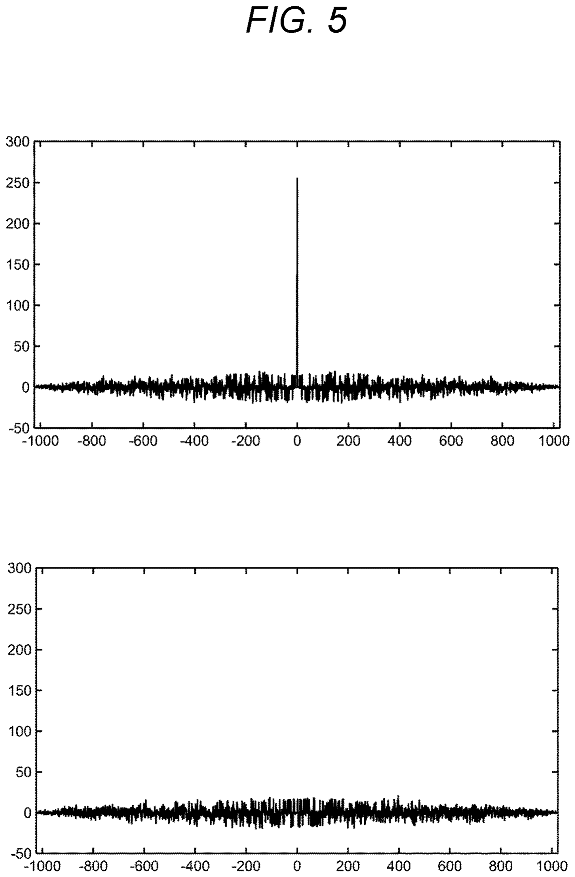

Furthermore, in the spreading code, for example, autocorrelation is in the form of impulse as illustrated in the waveform diagram in the upper part of Fig. 5, and cross-correlation is 0 as illustrated in the waveform in the lower part of Fig. 5. Note that Fig. 5 illustrates a change in the correlation value in a case where a Gold sequence is used as the spreading code, where the horizontal axis represents the coding sequence and the vertical axis represents the correlation value.

That is, with a highly random spreading code set to each of the audio output blocks 31-1 to 31-4, the audio input block 41 can appropriately distinguish and recognize the spectrum signal included in the audio for each of the audio output blocks 31-1 to 31-4.

The spreading code may be not only a Gold sequence but also an M sequence, pseudorandom noise (PN), or the like.

<Method for calculating transmission time by transmission time calculation unit>

The timing at which the peak of the observed cross-correlation is observed in the audio input block 41 is the timing at which the audio emitted by the audio output block 31 is collected in the audio input block 41, and thus differs depending on the distance between the audio input block 41 and the audio output block 31.

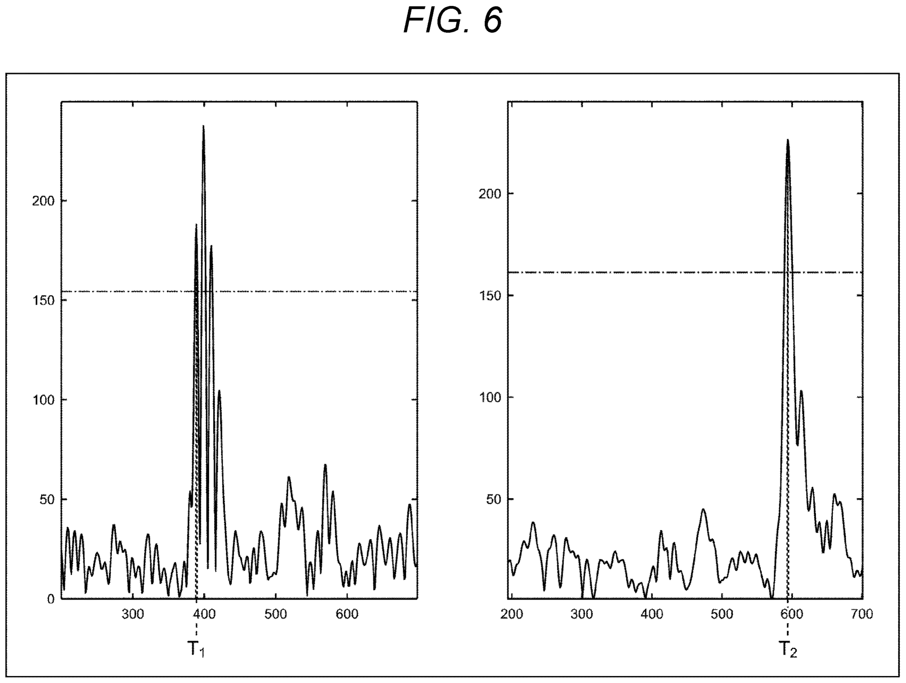

That is, for example, when the distance between the audio input block 41 and the audio output block 31 is a first distance and a peak is detected at time T1 as illustrated in the left part of Fig. 6, when the distance between the audio input block 41 and the audio output block 31 is a second distance longer than the first distance, the peak is observed at time T2 (> T1) as illustrated in the right part of Fig. 6.

Note that, in Fig. 6, the horizontal axis represents the elapsed time from when the audio is output from the audio output block 31, and the vertical axis represents the strength of cross-correlation.

That is, the distance between the audio input block 41 and the audio output block 31 can be obtained by multiplying the time from when audio is emitted from the audio output block 31 to when the peak is observed in the cross-correlation, that is, the transmission time from when audio is emitted from the audio output block 31 to when the audio is collected in the audio input block 41 by the sound velocity.

<Configuration example of transmission time calculation unit>

Next, a configuration example of the transmission time calculation unit 93 will be described with reference to Fig. 7.

The transmission time calculation unit 93 includes an inverse shift processing unit 130, a cross-correlation calculation unit 131, and a peak detection unit 132.

The inverse shift processing unit 130 restores, to the original frequency band by downsampling, a spreading code signal subjected to the spread spectrum modulation, which has been frequency-shifted by upsampling in the frequency shift processing unit 82 of the audio output block 31, in an audio signal collected by the audio input unit 51, and outputs the restored signal to the cross-correlation calculation unit 131.

Note that, regarding the shift of the frequency band by the frequency shift processing unit 82 and the restoration of the frequency band by the inverse shift processing unit 130, refer to International Publication No. 2022/163801 filed by the present applicant.

The cross-correlation calculation unit 131 calculates cross-correlation between the spreading code and the reception signal obtained by removing the known music sound source from the audio signal collected by the audio input unit 51 of the audio input block 41, and outputs the cross-correlation to the peak detection unit 132.

The peak detection unit 132 detects a peak time in the cross-correlation calculated by the cross-correlation calculation unit 131 and outputs the peak time as a transmission time.

Here, since the calculation of cross-correlation performed in the cross-correlation calculation unit 131 is generally known to have exceptionally large computational complexity, the calculation is achieved by equivalent calculation with less computational complexity.

Specifically, the cross-correlation calculation unit 131 performs Fourier transform on each of the transmission signal output as audio by the audio output unit 74 of the audio output block 31 and the reception signal obtained by removing the known music sound source from the audio signal received by the audio input unit 51 of the audio input block 41, as expressed by the following equations (1) and (2).

[Math. 1]

$$G(f) = \int_{-\infty}^{\infty} g\left(\frac{V-v}{V}t\right) \exp(-i2\pi ft) \, dt \quad \cdots \quad (1)$$

[Math. 2]

$$H(f) = \int_{-\infty}^{\infty} h(t) \exp(-i2\pi ft) \, dt \quad \cdots \quad (2)$$

Here, g represents the reception signal obtained by removing the known music sound source from the audio signal received by the audio input unit 51 of the audio input block 41, and G represents a result of Fourier transform performed on the reception signal g obtained by removing the known music sound source from the audio signal received by the audio input unit 51 of the audio input block 41.

Furthermore, h represents the transmission signal to be output as audio by the audio output unit 74 of the audio output block 31, and H represents a result of Fourier transform performed on the transmission signal to be output as audio by the audio output unit 74 of the audio output block 31.

Moreover, V represents the sound velocity, v represents the velocity of (the audio input unit 51 of) the electronic device 32, t represents time, and f represents frequency.

Next, the cross-correlation calculation unit 131 obtains a cross spectrum by mutually multiplying the results G and H of the Fourier transform as expressed by the following equation (3).

[Math. 3]

$$P(f) = G(f)H(f) \quad \cdots \quad (3)$$

Here, P represents a cross spectrum obtained by mutually multiplying the results G and H of the Fourier transform.

Then, as expressed by the following equation (4), the cross-correlation calculation unit 131 performs inverse Fourier transform on the cross spectrum P to obtain cross-correlation between the transmission signal h output as audio by the audio output unit 74 of the audio output block 31 and the reception signal g obtained by removing the known music sound source from the audio signal received by the audio input unit 51 of the audio input block 41.

[Math. 4]

$$p(t) = \int_{-\infty}^{\infty} P(t) \exp(-i2\pi ft) \, df \quad \cdots \quad (4)$$

Here, p represents cross-correlation between the transmission signal h output as audio by the audio output unit 74 of the audio output block 31 and the reception signal g obtained by removing the known music sound source from the audio signal received by the audio input unit 51 of the audio input block 41.

The pseudo distance calculation unit 94 calculates the pseudo distance between the audio input block 41 and the audio output block 31 by calculating the following equation (5) on the basis of the transmission time T obtained on the basis of the peak of the cross-correlation p.

[Math. 5]

$$D = T \times V$$

$$\cdots (5)$$

Here, D is a pseudo distance between (the audio input unit 51 of) the audio input block 41 and (the audio output unit 74 of) the audio output block 31, T is a transmission time, and V is a sound velocity. Furthermore, the sound velocity V is, for example, 331.5 + 0.6 × Q (m/s) (Q is temperature °C).

Note that the cross-correlation calculation unit 131 may further obtain the velocity v of (the audio input unit 51 of) the electronic device 32 by obtaining the cross-correlation p.

More specifically, the cross-correlation calculation unit 131 obtains the cross-correlation p while changing the velocity v in a predetermined range (for example, -1.00 m/s to 1.00 m/s) in a predetermined step (for example, 0.01 m/s step), and obtains the velocity v indicating the maximum peak of the cross-correlation p as the velocity v of (the audio input unit 51 of) the electronic device 32.

It is also possible to obtain the absolute speed of (the audio input block 41 of) the electronic device 32 on the basis of the velocity v obtained for each of the audio output blocks 31-1 to 31-4.

<Method of obtaining position of electronic device using analytical method>

(Time of Arrival (TOA) positioning)

Next, a method of obtaining a position of (an audio input unit 51-i of) the electronic device 32 using an analytical method based on a distance Dik between (an audio input unit 51-i of) the electronic device 32 and an audio output block 31-k will be described.

Note that, in the present disclosure, the position inference unit 95 including a DNN infers the position of the electronic device 32 on the basis of the pseudo distance between the electronic device 32 and each of the audio output blocks 31-1 to 31-4 supplied from the pseudo distance calculation unit 94 and the position of each of the audio output blocks 31-1 to 31-4, and does not obtain the position using an analytical method described below.

However, since information necessary for describing the data set used for the machine learning of the position inference unit 95 is included, the description will be made.

There are various methods for obtaining the position of (the audio input unit 51-i of) the electronic device 32 using an analytical method, and time of arrival (TOA) positioning and time difference of arrival (TDOA) positioning are widely known.

Time of arrival (TOA) positioning is a method for obtaining the position of a reception-side device on the basis of a distance relationship between the reception-side device and a plurality of transmission-side devices whose positions are known.

On the other hand, time difference of arrival (TDOA) positioning is a method for obtaining the position of the reception-side device on the basis of a distance difference relationship between the reception-side device and the plurality of transmission-side devices whose positions are known.

First, time of arrival (TOA) positioning will be described. Here, it is assumed that the position of (the audio output unit 74 of) the audio output block 31 serving as the transmission-side device is known.

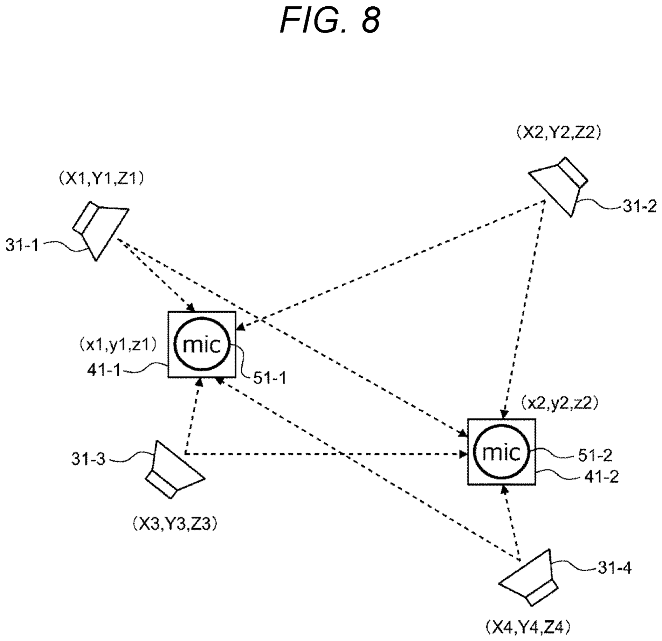

For example, as illustrated in Fig. 8, it is assumed that the position of (the audio output unit 74-1 of) the audio output block 31-1 is (X1, Y1, Z1), the position of (the audio output unit 74-2 of) the audio output block 31-2 is (X2, Y2, Z2), the position of (the audio output unit 74-3 of) the audio output block 31-3 is (X3, Y3, Z3), and the position of (the audio output unit 74-4 of) the audio output block 31-4 is (X4, Y4, Z4).

Furthermore, it is assumed that the position of the audio input unit 51-1 (of the audio input block 41-1 of the electronic device 32-1) is (x1, y1, z1) and the position of the audio input unit 51-2 (of the audio input block 41-2 of the electronic device 32-2) is (x2, y2, z2).

These are generalized such that the position of (the audio output unit 74-k of) the audio output block 31-k is (Xk, Yk, Zk) and the position of the audio input unit 51-i (of the audio input block 41-i of the electronic device 32-i) is (xi, yi, zi).

In this case, the distance Dik between (the audio output unit 74-k of) the audio output block 31-k and the audio input unit 51-i (of the audio input block 41-i of the electronic device 32-i) is expressed by the following equation (6).

[Math. 6]

$$\sqrt{(x_i - XK)^2 + (y_i - YK)^2 + (z_i - ZK)^2} + D_s = Dik \quad \cdots \quad (6)$$

Here, Ds represents a distance offset corresponding to system delay between the audio output block 31 and the audio input block 41.

Therefore, in a case where the distances Di1 to Di4 between the audio input unit 51-i (of the audio input block 41-i of the electronic device 32-i) and (the audio output unit 74 of) the audio output blocks 31-1 to 31-4 are obtained, the position (xi, yi, zi) of the audio input unit 51-i (of the audio input block 41-i of the electronic device 32-i) can be obtained by solving simultaneous equations represented by the following equation (7).

[Math. 7]

$$\sqrt{(x_i - X1)^2 + (y_i - Y1)^2 + (z_i - Z1)^2} + D_s = Di1$$
$$\sqrt{(x_i - X2)^2 + (y_i - Y2)^2 + (z_i - Z2)^2} + D_s = Di2$$
$$\sqrt{(x_i - X3)^2 + (y_i - Y3)^2 + (z_i - Z3)^2} + D_s = Di3 \qquad \cdots (7)$$
$$\sqrt{(x_i - X4)^2 + (y_i - Y4)^2 + (z_i - Z4)^2} + D_s = Di4$$

Note that, in the above, in a case where a distance offset Ds corresponding to a time offset caused by operation delay is known, the number of unknowns is three, and it is sufficient to have three simultaneous equations; therefore, if the positions of three audio output units 74 are known, it is possible to obtain the solution.

(Time Difference of Arrival (TDOA) positioning)

As described above, in a case of the method for obtaining the position of the electronic device based on time of arrival (TOA) positioning, in order to measure the above-described transmission time, the transmission time and the reception time need to be strictly managed, making complete synchronization of clocks used in the audio input unit 51 (of the audio input block 41 of the electronic device 32) and the audio output block 31 is a mandatory requirement.

However, it is practically difficult to completely synchronize the clocks of the audio input unit 51 (of the audio input block 41 of the electronic device 32) and the audio output block 31.

Therefore, in time difference of arrival (TDOA) positioning, the use of differences in distance between the electronic device 32 and the audio output blocks 31-1 to 31-i compensates for an error caused by asynchronous clocks used for measuring the distance and eliminates the need for clock synchronization. Note that synchronization is not required for the clocks used in the electronic device 32 and the audio output block 31, but the timing of the audios emitted from the audio output blocks 31-1 to 31-4 needs to be synchronized.

More specifically, it can be obtained by solving simultaneous equations as expressed by the following equation (8).

[Math. 8]

$$Di2 - Di1 = V(t2 - t1) = \left( \sqrt{(x_i - X2)^2 + (y_i - Y2)^2 + (z_i - Z2)^2} + D_s \right)$$
$$- \left( \sqrt{(x_i - X1)^2 + (y_i - Y1)^2 + (z_i - Z1)^2} + D_s \right)$$
$$Di3 - Di1 = V(t3 - t1) = \left( \sqrt{(x_i - X3)^2 + (y_i - Y3)^2 + (z_i - Z3)^2} + D_s \right)$$
$$- \left( \sqrt{(x_i - X1)^2 + (y_i - Y1)^2 + (z_i - Z1)^2} + D_s \right)$$
$$Di4 - Di1 = V(t4 - t1) = \left( \sqrt{(x_i - X4)^2 + (y_i - Y4)^2 + (z_i - Z4)^2} + D_s \right)$$
$$- \left( \sqrt{(x_i - X1)^2 + (y_i - Y1)^2 + (z_i - Z1)^2} + D_s \right)$$

$$\cdots (8)$$

<Inference of position of electronic device in present disclosure>

As described above, when the distances Di1 to Di4 between (the audio input unit 51-i of the audio input block 41-i of) the electronic device 32-i and (the audio output unit 74 of) the audio output blocks 31-1 to 31-4 are obtained, the position (xi, yi, zi) of the audio input unit 51-i (of the audio input block 41-i of the electronic device 32-i) can be obtained by solving the simultaneous equations represented by the above-described equation (8) even in a state where the clocks of the electronic device 32 and the audio output block 31 are not synchronized.

Meanwhile, the simultaneous equations as expressed by the above-described equation (7) or (8) are based on the assumption that the audio emitted from the audio output unit 74 of the audio output block 31 is linearly transmitted and collected by the audio input unit 51 of the electronic device 32.

However, in reality, the audio emitted from the audio output unit 74 of the audio output block 31 may be linearly transmitted and not collected by the audio input unit 51-i of the audio input block 41-i of the electronic device 32 i.

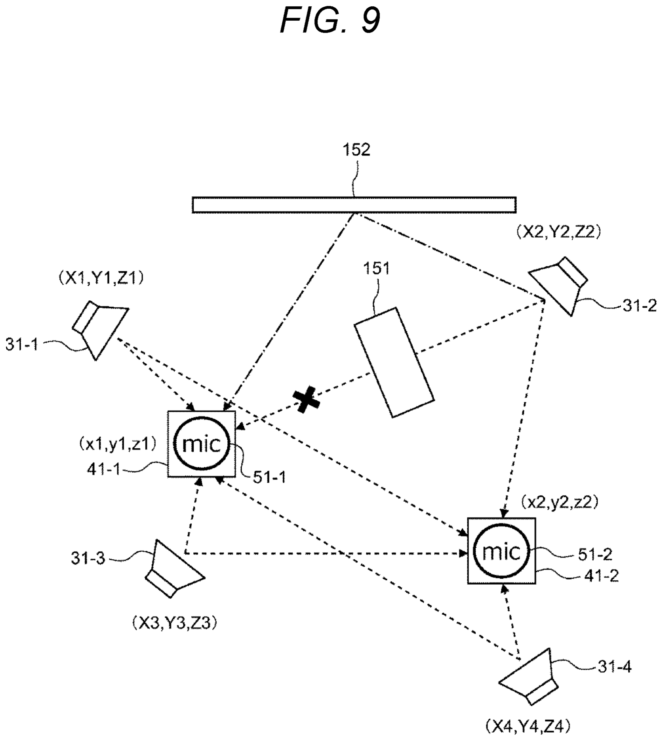

For example, as illustrated in Fig. 9, in a case where a shielding object 151 exists between the audio output block 31-2 and the audio input block 41-1 of the electronic device 32-1, the audio emitted from the audio output block 31-2 is shielded by the shielding object 151, and thus, there is a possibility that the audio input block 41-1 cannot collect the audios at a sufficient level and the distance between both cannot be appropriately obtained.

Furthermore, as illustrated in Fig. 9, in a case where a wall surface 152 is present in the upper part of the drawing, there is a possibility that the audio emitted from the audio output block 31-2 is reflected by the wall surface 152 and collected by the audio input block 41-1 as indicated by an alternate long and short dash line arrow.

As described above, in a case where the audio emitted from the audio output block 31-2 is shielded by the shielding object 151, reflected by the wall surface 152, and collected by the audio input block 41-1, the emitted audio is linearly transmitted, whereas the transmission path becomes long.

As a result, the transmission of the emitted audio is delayed compared to the actual case, and a shift occurs in the timing at which the emitted audio is collected, so that the transmission time becomes long, and there is a possibility that the distance between both are obtained as a distance farther than the actual distance.

In the TDOA described above, as a method of suppressing influences such as shielding and reflection, it is conceivable to obtain the position of the electronic device 32 more robustly by an iterative reweighted least squares method (IRLS) by configuring four or more equations.

However, even if IRLS is used, it is not possible to robustly cope with any influence of shielding and reflection.

Therefore, in the present disclosure, the position of the electronic device 32 and the position of the audio output block 31 are randomly set by simulation within a settable range, and pseudo random noise simulating noise assumed to occur on the transmission path is imparted to a mutual distance (hereinafter, a simulation distance), thereby generating a simulation pseudo distance.

Then, the position inference unit 95 that infers the position of the electronic device 32 from the pseudo distance and the position of the audio output block 31 is caused to perform machine learning by the data set including the simulation position of the electronic device 32, the simulation position of the audio output block 31, and the simulation pseudo distance.

More specifically, at the simulation position of the electronic device 32 and the simulation position of the audio output block 31 randomly set by simulation, a pseudo random noise that assumes a shift in arrival time due to shielding or reflection is imparted to a simulation distance obtained by collecting the audio emitted from the audio output block 31 in an ideal state in the electronic device 32, thereby generating a simulation pseudo distance.

Then, by machine learning using a data set including the generated simulation position of the electronic device 32, the simulation position of the audio output block 31, and the simulation pseudo distance, the position inference unit 95 that infers the position of the electronic device 32 on the basis of the pseudo distances of the electronic device 32 and the audio output blocks 31-1 to 31-4 supplied from the pseudo distance calculation unit 94 and the positions of the known audio output blocks 31-1 to 31-4 is generated.

In order to improve the inference accuracy of the position inference unit 95, it is necessary to generate and learn more simulation pseudo distances in which various pseudo random noises are added to the simulation distance to be a true value as a data set.

In the present disclosure, pseudo random noise is imparted to a simulation distance that is a true value, so that a data set to which noise is imparted assuming various shields, reflections, and the like is generated at low cost.

As a result, the machine learning of the position inference unit 95 using many data sets is facilitated, and the accuracy of the position of the electronic device 32 inferred from the pseudo distance and the position of the audio output block 31 by the position inference unit 95 is improved.

<Configuration example of learning device>

Next, a specific configuration example of the learning device 201 that causes the position inference unit 95 of the present disclosure to perform machine learning will be described with reference to Fig. 10.

The learning device 201 of Fig. 10 includes a position simulator 211, a noise imparting unit 212, and a position inference unit 213 (95).

The position simulator 211 generates, as simulation positions, a position where the electronic device 32 required for machine learning of the position inference unit 213 (95) can exist and a position where the audio output block 31 can exist, and outputs a mutual distance between the electronic device 32 and the audio output block 31 at each simulation position as a simulation distance.

More specifically, the position simulator 211 includes an electronic device position output unit 221, an audio output block position output unit 222, and a simulation distance calculation unit 223.

The electronic device position output unit 221 randomly generates a three-dimensional position where (the audio input unit 51 of the audio input block 41 of) the electronic device 32 can exist as a simulation position in a predetermined space, and outputs the simulation position to the simulation distance calculation unit 223 and the position inference unit 213 (95).

The audio output block position output unit 222 randomly generates a three-dimensional position where (the audio output unit 74 of) the audio output block 31 can exist as a simulation position in a predetermined space, and outputs the simulation position to the simulation distance calculation unit 223 and the position inference unit 213 (95).

The simulation distance calculation unit 223 calculates a mutual distance as a simulation distance from the simulation position of the electronic device 32 supplied from the electronic device position output unit 221 and the simulation position of the audio output block 31 supplied from the audio output block position output unit 222, and outputs the simulation distance to the noise imparting unit 212.

The simulation distance, which is a mutual distance between the simulation position of the electronic device 32 and the simulation position of the audio output block 31 calculated by the simulation distance calculation unit 223, is a mutual distance that can be regarded as a true value calculated in an ideal state obtained by transmitting the audio emitted from the audio output block 31 to the electronic device 32 and collecting the audio without being affected by noise such as shielding or reflection.

The noise imparting unit 212 imparts pseudo random noise to the simulation distance supplied from the simulation distance calculation unit 223 of the position simulator 211 to convert the simulation distance into a simulation pseudo distance, and outputs the simulation distance to the position inference unit 213.

By imparting the pseudo random noise to the simulation distance, the audio emitted from the audio output block 31 is transmitted to the electronic device 32 and collected in a state of being affected by noise caused by various factors such as shielding and reflection, and is converted into a mutual distance, that is, a simulation pseudo distance.

More specifically, the noise imparting unit 212 imparts, to the simulation distance, noise assuming an influence of at least one of an observation error, a multipath error, an NLOS error, and an error in audio emission timing of the plurality of audio output blocks 31, for example.

The observation error is a stochastic error of a timing at which a peak of cross-correlation between emitted audio and collected audio detected by collecting the emitted audio described with reference to Figs. 6 and 7 is observed.

The noise imparting unit 212 imparts noise that assumes an influence of an observation error by imparting Gaussian noise or noise according to a uniform distribution (hereinafter, it is also referred to as uniform distribution noise) to a minute error of several frames with respect to a simulation distance that is a true value.

The multipath error is an error that simulates a situation in which a reflected wave of the emitted audio is erroneously collected in a case where a direct wave of the emitted audio is to be collected, or an error that simulates a situation in which a direct wave of the emitted audio is erroneously collected in a case where a reflected wave of the emitted audio is to be collected, and has a lower occurrence probability than the observation error.

In order to apply noise having an error simulating when a reflected wave of emitted audio is erroneously collected in a case where a direct wave of the emitted audio is to be collected, the noise imparting unit 212 imparts, as noise simulating a multipath error, uniform distributed noise having a distance longer than the simulation distance due to a delay in collection caused by collection of the reflected wave of the emitted audio, which is a true value, to the simulation distance observed by collection of the direct wave of the emitted audio.

In addition, in order to apply noise having an error simulating when a reflected wave of emitted audio is erroneously detected in a case where the reflected wave of the emitted audio is to be collected, the noise imparting unit 212 imparts, as noise simulating a multipath error, uniform distributed noise having a distance shorter than the simulation distance due to early collection of the direct wave of the emitted audio to a simulation distance observed by collecting the reflected wave of the emitted audio, which is a true value.

The non line of sight (NLOS) error is an error in a case where emitted audio is shielded by a shielding object or the like and the emitted audio cannot be collected, and is an error having a large maximum value of the error amount, but has a lower occurrence probability than the observation error.

The noise imparting unit 212 imparts uniform distribution noise simulating a non line of sight (NLOS) error to the simulation distance that is a true value.

The error in the audio emission timing of the plurality of audio output blocks 31-1 to 31-4 is an error caused by the fact that the clocks among the plurality of audio output blocks 31-1 to 31-4 cannot be completely synchronized, and is an error caused by the fact that the audios emitted from the respective audio output units 74 cannot be synchronized.

The noise imparting unit 212 imparts Gaussian noise or uniform distribution noise simulating an error of the audio emission timing of the plurality of audio output blocks 31-1 to 31-4 to the simulation distance that is a true value.

As described above, the noise imparting unit 212 generates the simulation pseudo distance by applying the pseudo random noise simulating the noise of at least one of the plurality of various types of errors described above to the simulation distance, and outputs the simulation pseudo distance to the position inference unit 213 (95).

The position inference unit 213 has a configuration corresponding to the position inference unit 95 and includes a deep neural network (DNN). In the position inference unit 213, machine learning based on the simulation position of the electronic device 32 supplied from the electronic device position output unit 221, the simulation position of the audio output block 31 supplied from the audio output block position output unit 222, and the simulation pseudo distance supplied from the noise imparting unit 212 is performed.

By performing such machine learning, the position inference unit 213 (95) functions as an inference unit that infers the position of the electronic device 32 on the basis of the pseudo distance calculated by the pseudo distance calculation unit 94 of the position detection unit in the electronic device 32 and the respective positions of the known audio output blocks 31-1 to 31-4.

With such a configuration, the learning device 201 of the present disclosure can generate a large number of data sets to which noise simulating various types of errors is imparted at low cost and cause the position inference unit 213 (95) to perform machine learning.

As a result, since a large number of data sets can be generated at low cost, machine learning of the position inference unit 95 can be easily realized, and the position of the electronic device 32 can be inferred with high accuracy from the pseudo distance calculated by the pseudo distance calculation unit 94 of the position detection unit in the electronic device 32 and the positions of the known audio output blocks 31-1 to 31-4.

<Position inference unit learning processing>

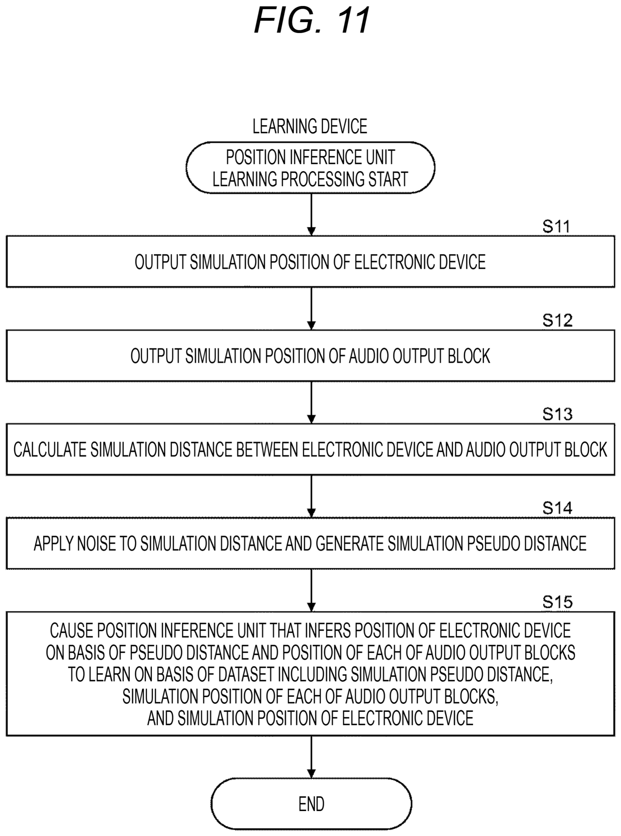

Next, learning processing of the position inference unit 213 (95) by the learning device 201 of Fig. 10 will be described with reference to the flowchart of Fig. 11.

In step S11, the electronic device position output unit 221 of the position simulator 211 randomly generates a three-dimensional position where (the audio input unit 51 of the audio input block 41 of) the electronic device 32 can exist in a predetermined space by simulation, and outputs the three-dimensional position as a simulation position to the simulation distance calculation unit 223 and the position inference unit 213 (95).

In step S12, the audio output block position output unit 222 of the position simulator 211 randomly generates a three-dimensional position where (the audio output unit 74 of) the audio output block 31 can exist in a predetermined space by simulation, and outputs the three-dimensional position as a simulation position to the simulation distance calculation unit 223 and the position inference unit 213 (95).

In step S13, the simulation distance calculation unit 223 calculates a mutual distance as a simulation distance that is a true value from the simulation position of the electronic device 32 supplied from the electronic device position output unit 221 and the simulation position of the audio output block 31 supplied from the audio output block position output unit 222, and outputs the simulation distance to the noise imparting unit 212.

In step S14, the noise imparting unit 212 imparts pseudo random noise that simulates noise of at least one of the plurality of various types of errors described above to the simulation distance supplied from the simulation distance calculation unit 223 of the position simulator 211 to convert the simulation distance into a simulation pseudo distance and outputs the simulation distance to the position inference unit 213.

In step S15, machine learning of the position inference unit 213 (95) that infers the position of the electronic device 32 from the pseudo distance calculated by the pseudo distance calculation unit 94 of the position detection unit in the electronic device 32 and the known position of the audio output block 31 is performed on the basis of the data set including the simulation position of the electronic device 32 supplied from the electronic device position output unit 221, the simulation position of the audio output block 31 supplied from the audio output block position output unit 222, and the simulation pseudo distance supplied from the noise imparting unit 212.

With the above processing, it is possible to generate a large number of data sets to which noise simulating various types of errors is added at low cost (easily) and cause the position inference unit 213 to perform machine learning.

As a result, it becomes possible to easily realize the machine learning of the position inference unit 213 (95) using a large number of data sets, and the electronic device 32 can infer the position of the electronic device 32, which is the self-position, with high accuracy by collecting the audio emitted from the audio output block 31.

Note that, in the above, an example has been described in which the electronic device position output unit 221 and the audio output block position output unit 222 randomly set positions from all the positions where the electronic device 32 and the audio output block 31 can exist in a predetermined space.

However, in a case where a range that can exist in the predetermined space is specified within a predetermined range, it is desirable that the position is randomly set within the specified predetermined range.

That is, machine learning based on the generated data set becomes possible in a state where the positions of the electronic device 32 and the audio output block 31 output from the electronic device position output unit 221 and the audio output block position output unit 222 are narrowed within a predetermined range in a predetermined space.

As a result, it is possible to generate the position inference unit 95 with equivalent inference accuracy by machine learning of a smaller number of data sets within a predetermined range as compared with machine learning using data sets generated for all positions that can exist in a predetermined space, and it is possible to improve the processing efficiency of the learning processing.

In addition, it is possible to cause the position inference unit 95 with higher inference accuracy to learn by machine learning of the same number of data sets as the data sets generated for all the positions that can exist in the predetermined space within the specified predetermined range in the predetermined space.

For this reason, as for the position inference unit 95, one that has been subjected to the learning processing using the data set generated for all the positions that can exist in the predetermined space may be installed and used as it is. However, when the learning processing is performed again under the specified conditions after at least one of the arrangement of the audio output block position output unit 222 and the range in which the electronic device 32 moves is specified, efficiency related to the learning processing and inference accuracy can be improved.

<Position measurement processing>

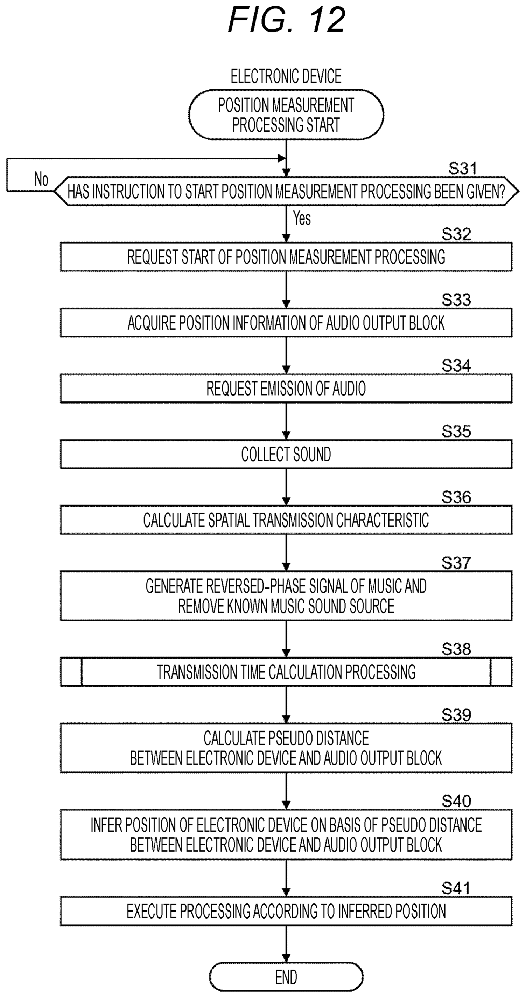

Next, position measurement processing by the audio output block 31 and the electronic device 32 will be described with reference to the flowcharts in Figs. 12 to 14.

Note that the processing of Figs. 12 to 14 will be described with reference to the flowchart of Fig. 11 on the assumption that the position inference unit learning processing has been performed.

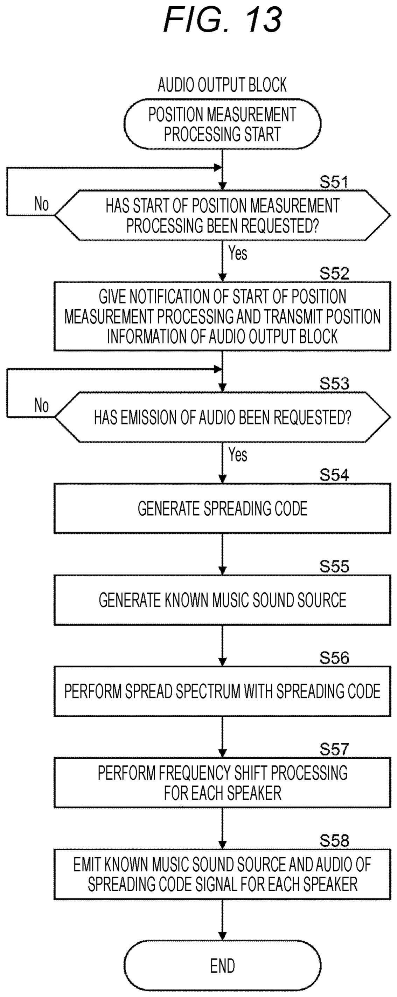

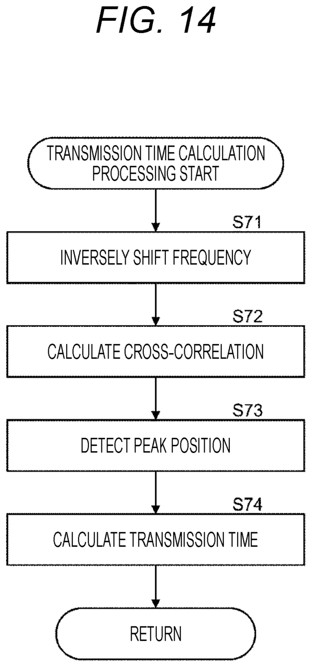

Further, Fig. 12 is a flowchart for explaining the processing of the electronic device 32, and Fig. 13 is a flowchart for explaining the processing of the audio output block 31. Further, Fig. 14 is a flowchart for explaining transmission time calculation processing that is processing in step S38 in Fig. 12.

In step S31 (Fig. 12), the control unit 42 of the electronic device 32 determines whether or not an instruction to start the position measurement processing has been given by the user operating an operation unit or the like (not illustrated), and repeats the similar processing until the instruction is given.

Then, in step S31, in a case where the start of the position measurement processing has been instructed, the processing proceeds to step S32.

In step S32, the control unit 42 controls the communication unit 43 to request the audio output block 31 to start the position measurement processing.

In step S51 (Fig. 13), the audio generation unit 73 of the audio output block 31 controls the communication unit 75 to determine whether or not the electronic device 32 has requested the start of the position measurement processing, and repeats the similar processing until the request.

Then, in step S51, in a case where the electronic device 32 requests the start of the position measurement processing, the processing proceeds to step S52.

In step S52, the audio generation unit 73 controls the communication unit 75 to transmit its own position information to the electronic device 32 together with the information indicating the start of the position measurement processing. Through this processing, the position information regarding each of the audio output blocks 31-1 to 31-4 is transmitted from the audio output blocks 31-1 to 31-4 to the electronic device 32.

In step S33 (Fig. 12), the control unit 42 of the electronic device 32 controls the communication unit 43 to acquire the information indicating the start of the position measurement processing and the position information supplied from the audio output block 31, and supplies the acquired information and position information to the position inference unit 95.

In step S34, the control unit 42 controls the communication unit 43 to request the audio output block 31 to emit audio.

In step S53 (Fig. 13), the audio generation unit 73 of the audio output block 31 controls the communication unit 75 to determine whether or not the emission of the audio is requested, and repeats the similar processing until the emission is requested.

Then, in step S53, when the emission of the audio is requested, the processing proceeds to step S54.

In step S54, the audio generation unit 73 controls the spreading code generation unit 71 to generate and acquire the spreading code.

In step S55, the audio generation unit 73 controls the known music sound source generation unit 72 to generate and acquire a stored known music sound source.

In step S56, the audio generation unit 73 controls the spreading unit 81 to multiply a predetermined data code by the spreading code and perform spread spectrum modulation to generate a spreading code signal.

In step S57, the audio generation unit 73 controls the frequency shift processing unit 82 to frequency-shift the spreading code signal according to each frequency characteristic of the audio output unit 74.

In step S58, the audio generation unit 73 outputs the known music sound source and the frequency-shifted spreading code signal to the audio output unit 74 including a speaker, and emits (outputs) the signal as audio.

By performing the above processing in each of the audio output blocks 31-1 to 31-4, it is possible to emit audio and allow the user who possesses the electronic device 32 to listen to the audio as the known music sound source.

Furthermore, since the spreading code signal can be shifted to a frequency band inaudible to humans including the user and be output as audio, the electronic device 32 can measure the distance to the audio output block 31 on the basis of the emitted audio including the spreading code signal shifted to a frequency band inaudible to humans without causing the user to hear unpleasant sound.

In step S35 (Fig. 12), the audio input unit 51 including a microphone collects audio and outputs the collected audio to the known music sound source removal unit 91 and the spatial transmission characteristic calculation unit 92 of the position detection unit 52.

In step S36, the spatial transmission characteristic calculation unit 92 calculates the spatial transmission characteristic on the basis of the audio supplied from the audio input unit 51, the characteristic of the audio input unit 51, and the characteristics of the audio output units 74 of the audio output blocks 31, and outputs the spatial transmission characteristic to the known music sound source removal unit 91.

In step S37, the known music sound source removal unit 91 generates a reversed-phase signal of the known music sound source in consideration of the spatial transmission characteristic supplied from the spatial transmission characteristic calculation unit 92, removes a component of the known music sound source from the audio supplied from the audio input unit 51, and outputs the audio to the transmission time calculation unit 93.

In step S38, the transmission time calculation unit 93 executes transmission time calculation processing, calculates a transmission time until the audio output from the audio output block 31 is transmitted to the audio input unit 51, and outputs the transmission time to the pseudo distance calculation unit 94.

<Transmission time calculation processing>

Here, transmission time calculation processing by the transmission time calculation unit 93 will be described with reference to a flowchart of Fig. 14.

In step S71, the inverse shift processing unit 130 inversely shifts the frequency band of the spreading code signal from which the known music sound source has been removed from the audio input by the audio input unit 51 supplied from the known music sound source removal unit 91.

In step S72, the cross-correlation calculation unit 131 calculates the cross-correlation between the spreading code signal obtained by inversely shifting the frequency band and removing the known music sound source from the audio input by the audio input unit 51 and the spreading code signal of the audio output from the audio output block 31 by the calculation using the equations (1) to (4) described above.

In step S73, the peak detection unit 132 detects a peak in the calculated cross-correlation.

In step S74, the peak detection unit 132 outputs the time detected as the peak in the cross-correlation to the pseudo distance calculation unit 94 as the transmission time.

Note that the transmission time corresponding to each of the plurality of audio output blocks 31 is obtained by calculating the cross-correlation with the spreading code signal of the audio output from each of the plurality of audio output blocks 31.

Here, the description returns to the flowchart of Fig. 12.

In step S39, the pseudo distance calculation unit 94 multiplies the transmission time corresponding to each of the plurality of audio output blocks 31 by the sound velocity to calculate the pseudo distance between each of the plurality of audio output blocks 31 and itself (the electronic device 32), and outputs the pseudo distance to the position inference unit 95.

In step S40, the position inference unit 95 infers the position of its own (the electronic device 32) from the distance between each of the plurality of audio output blocks 31 and its own (the electronic device 32) and the information regarding the positions of the plurality of audio output blocks 31, and outputs the information regarding its own position (its own position) that is the inference result to the control unit 42.

In step S41, the control unit 42 executes processing based on the inferred position of the electronic device 32, which is its own position, and ends the processing.

For example, the control unit 42 controls the communication unit 43 to transmit a command for controlling the level and timing of the audio output from each of the audio output units 74 of the audio output blocks 31-1 to 31-4 to the audio output blocks 31-1 to 31-4 so that a sound field based on the obtained position of the electronic device 32 can be achieved.

As a result, in the audio output blocks 31-1 to 31-4, the sound field control unit 83 controls the level and timing of the audio output from the audio output unit 74 so as to achieve the sound field corresponding to the position of the user who possesses the electronic device 32 on the basis of the command transmitted from the electronic device 32.

With the above series of processing, in measuring the position of the electronic device 32, the position of the electronic device 32 is inferred as the self position on the basis of the pseudo distance and the position of the audio output block 31 by the position inference unit 95 on which machine learning based on the pseudo distance obtained from the audio emitted from the audio output block 31, the position of the audio output block, and the position of the electronic device 32 has been performed, so that the accuracy of the position of the electronic device 32 can be improved.

Note that, in the above, an example has been described where the audio signal based on sound (sound wave) is used as the transmission medium of the modulated signal serving as the ranging signal; however, a different transmission medium such as a radio wave or light may be used. For example, in a smart factory or the like, a user position tracking system or the like that specifies the position of a smartphone possessed by a user by transmitting and receiving the ranging signal including a modulated signal using a radio wave such as ultra wide band (UWB) as a transmission medium may be implemented.

As described above, in a case where the ranging signal including a modulated signal is transmitted and received using a radio wave such as UWB as a transmission medium, the audio output block 31 that transmits (outputs) the ranging signal including an audio signal to emit audio may be replaced with, for example, a radio wave output block 31 that transmits (outputs) a ranging signal including a radio wave signal, and may be configured to be installed at a known position in a smart factory. Furthermore, in this case, the audio input block 41 that collects and receives (inputs) the ranging signal including an audio signal may be replaced with, for example, a radio wave input block 41 that receives (inputs) the ranging signal including a radio wave signal, or the like, and may be configured to be incorporated into the smartphone possessed by the user.

Furthermore, in a case where a transmission medium such as light, other than a sound wave and a radio wave, is used, the audio output block 31 and the audio input block 41 may be replaced with, for example, an optical output block 31 and an optical input block 41 that transmit and receive an optical signal using light as a transmission medium, the optical signal serving as the ranging signal including a modulated signal.

Moreover, the audio output block 31 and the audio input block 41 may be replaced with a ranging signal output block 31 that outputs (transmits) the ranging signal and a ranging signal input block 41 that receives (inputs) the ranging signal, respectively, regardless of the type of transmission medium of the ranging signal.

Furthermore, as for the modulated signal, an example has been described where a signal modulated by the spreading code is transmitted and received; however, other signals may be used, specifically, a transmission signal such as frequency modulated continuous wave (FMCW) or a BLE beacon may be used.

<<2. Example executed by software>>

Incidentally, the series of processing described above can be executed by hardware, but can also be executed by software. In a case where the series of processing is executed by software, a program forming the software is installed from a recording medium into, for example, a computer built into dedicated hardware or a general-purpose computer that is capable of executing various functions by installing various programs, or the like.

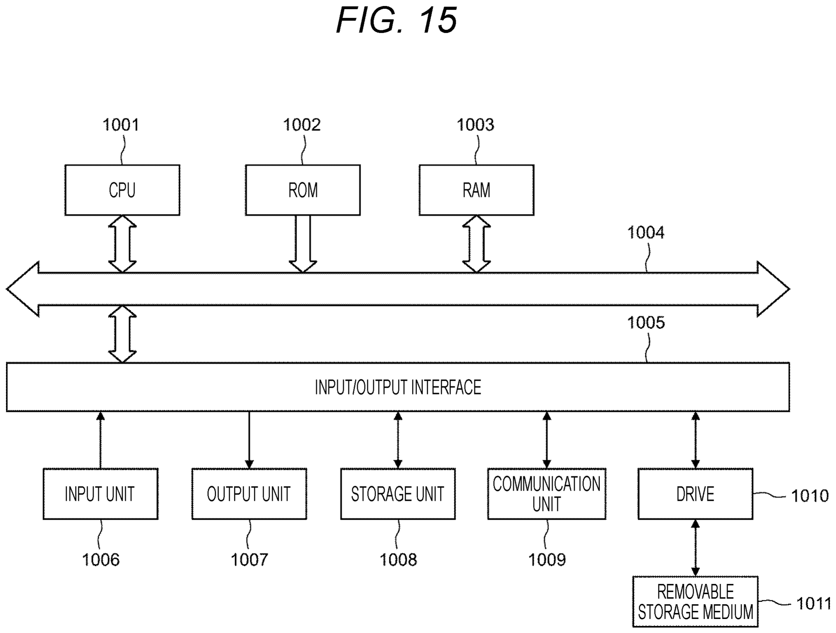

Fig. 15 illustrates a configuration example of a general-purpose computer. This computer includes a central processing unit (CPU) 1001. An input/output interface 1005 is connected to the CPU 1001 via a bus 1004. A read only memory (ROM) 1002 and a random access memory (RAM) 1003 are connected to the bus 1004.

The input/output interface 1005 is connected to an input unit 1006 including an input device such as a keyboard or a mouse with which the user inputs an operation command, an output unit 1007 that outputs a processing operation screen and an image of a processing result to a display device, a storage unit 1008 including a hard disk drive or the like that stores programs and various types of data, and a communication unit 1009 that includes a local area network (LAN) adapter or the like and executes communication processing via a network represented by the Internet. Furthermore, a drive 1010 that reads and writes data from and to a removable storage medium 1011 such as a magnetic disk (including flexible disk), an optical disc (including compact disc-read only memory (CD-ROM) and digital versatile disc (DVD)), a magneto-optical disk (including mini disc (MD)), or a semiconductor memory is connected.

The CPU 1001 performs various types of processing according to a program stored in the ROM 1002 or a program read from the removable storage medium 1011 such as a magnetic disk, an optical disc, a magneto-optical disk, or a semiconductor memory, installed in the storage unit 1008, and loaded from the storage unit 1008 into the RAM 1003. The RAM 1003 also appropriately stores data necessary for the CPU 1001 to perform various types of processing, and the like.

In the computer configured as described above, for example, the CPU 1001 loads the program stored in the storage unit 1008 into the RAM 1003 via the input/output interface 1005 and the bus 1004 and executes the program, thereby performing the above-described series of processing.

The program executed by the computer (CPU 1001) can be provided by being recorded in the removable storage medium 1011 as a package medium or the like, for example. Furthermore, the program can be provided via a wired or wireless transmission medium such as a local area network, the Internet, or digital satellite broadcasting.

In the computer, the program can be installed in the storage unit 1008 via the input/output interface 1005 by attaching the removable storage medium 1011 to the drive 1010. Furthermore, the program may be received by the communication unit 1009 by means of the wired or wireless transmission medium to be installed on the storage unit 1008. Alternatively, the program can be installed in the ROM 1002 or the storage unit 1008 in advance.

Note that the program to be executed by the computer may be a program that performs processing in time-series order described in the present specification, or may be a program that performs processing in parallel or at necessary timing such as when a call is made.

Note that the CPU 1001 in Fig. 15 implements the functions of the audio output block 31 and the audio input block 41 of Fig. 1, and the learning device 201 of Fig. 10.

Furthermore, in the present specification, a system means a set of a plurality of constituent elements (apparatuses, modules (components), or the like), and it does not matter whether or not all the constituent elements are in the same housing. Therefore, a plurality of apparatuses housed in separate housings and connected to each other via a network, and one apparatus including a plurality of modules housed in one housing, are both systems.

Note that the embodiment of the present disclosure is not limited to the above-described embodiment, and various modifications can be made without departing from the gist of the present disclosure.

For example, the present disclosure may have a configuration of cloud computing in which one function is shared by a plurality of devices via a network and processing is performed in cooperation.

Furthermore, each step described in the flowchart described above may be executed by a single device, or may be executed by a plurality of devices in a shared manner.

Moreover, in a case where a plurality of pieces of processing is included in one step, the plurality of pieces of processing included in the one step can be executed by one device or executed by a plurality of devices in a shared manner.

Note that the present disclosure may also have the following configurations.

<1> A program for causing a computer to function as:

a distance measurement signal receiving unit that receives a distance measurement signal including a spreading code signal obtained by performing spread spectrum modulation on a spreading code and output from a plurality of distance measurement signal output blocks existing at known positions; and

a position inference unit that infers a position of the distance measurement signal receiving unit by machine learning on the basis of a pseudo distance to the plurality of distance measurement signal output blocks specified from a transmission time that is a time until the distance measurement signals of the plurality of distance measurement signal output blocks are transmitted to and received by the distance measurement signal receiving unit, and known positions of the plurality of distance measurement signal output blocks.

<2> The program according to <1>, in which

the position inference unit performs the machine learning using a data set based on a simulation distance that is a true value of a distance between the distance measurement signal receiving unit and each of the plurality of distance measurement signal output blocks.

<3> The program according to <2>, in which

the simulation distance is a true value of a distance between a simulation position of the distance measurement signal receiving unit and a simulation position of each of the plurality of distance measurement signal output blocks, the simulation position being generated by simulation and being randomly set in a predetermined space.

<4> The program according to <3>, in which

the position inference unit performs the machine learning using a data set including a simulation pseudo distance generated by imparting noise assumed in transmission and reception of the distance measurement signal to the simulation distance.

<5> The program according to <4>, in which

the position inference unit includes a deep neural network (DNN), and the machine learning is performed to infer the position of the distance measurement signal receiving unit on the basis of the pseudo distance and known positions of the plurality of distance measurement signal output blocks using a data set including the simulation pseudo distance generated on the basis of the simulation distance, the simulation position of the corresponding distance measurement signal receiving unit, and the simulation position of each of the plurality of distance measurement signal output blocks.

<6> The program according to <4>, in which

the simulation pseudo distance is generated by imparting pseudo random noise corresponding to noise assumed in transmission and reception of the distance measurement signal to the simulation distance.

<7> The program according to <6>, in which

the simulation pseudo distance is generated when the pseudo random noise simulating noise of at least one of an observation error, a multipath error, a non line of sight (NLOS) error, and an error in audio emission timing of the plurality of distance measurement signal output blocks, which are assumed in transmission and reception of the distance measurement signal, is imparted to the simulation distance.

<8> The program according to <7>, in which

the simulation pseudo distance is generated by imparting Gaussian noise or uniformly distributed noise simulating the observation error assumed in transmission and reception of the distance measurement signal to the simulation distance.

<9> The program according to <7>, in which

the simulation pseudo distance is generated by imparting uniform distribution noise simulating the multipath error assumed in transmission and reception of the distance measurement signal to the simulation distance.

<10> The program according to <7>, in which

the simulation pseudo distance is generated by imparting uniform distribution noise simulating the NLOS error assumed in transmission and reception of the distance measurement signal to the simulation distance.

<11> The program according to <7>, in which

the simulation pseudo distance is generated by imparting Gaussian noise or uniform distribution noise simulating an error of an audio emission timing of the plurality of distance measurement signal output blocks assumed in transmission and reception of the distance measurement signal to the simulation distance.

<12> The program according to <1>, further including:

a transmission time calculation unit that calculates the transmission time until each of the distance measurement signals of the plurality of distance measurement signal output blocks is transmitted to the distance measurement signal receiving unit; and

a pseudo distance calculation unit that calculates the pseudo distance of each of the plurality of distance measurement signal output blocks from the transmission time of each of the distance measurement signals of the plurality of distance measurement signal output blocks, in which

the position inference unit infers the position of the distance measurement signal receiving unit by the machine learning on the basis of the known positions of the plurality of distance measurement signal output blocks and the pseudo distances of the plurality of distance measurement signal output blocks.

<13> The program according to <12>, in which

the transmission time calculation unit includes:

a cross-correlation calculation unit that calculates cross-correlation between a spreading code signal in the distance measurement signal received by the distance measurement signal receiving unit and a spreading code signal of the distance measurement signal output from the plurality of distance measurement signal output blocks; and

a peak detection unit that detects a peak time in the cross-correlation as the transmission time,

the pseudo distance calculation unit calculates the pseudo distance of each of the plurality of distance measurement signal output blocks from the transmission time of each of the distance measurement signals of the plurality of distance measurement signal output blocks, and

the position inference unit infers the position of the distance measurement signal receiving unit by the machine learning on the basis of the pseudo distances to the plurality of distance measurement signal output blocks and the known positions of the plurality of distance measurement signal output blocks.

<14> The program according to any one of <1> to <13>, in which

the distance measurement signal receiving unit is provided on a smartphone or a head mounted display (HMD).

<15> The program according to any one of <1> to <14>, in which

the distance measurement signal includes an audio signal, a radio wave signal, and an optical signal.

<16> An information processing apparatus including:

a distance measurement signal receiving unit that receives a distance measurement signal including a spreading code signal obtained by performing spread spectrum modulation on a spreading code and output from a plurality of distance measurement signal output blocks existing at known positions; and

a position inference unit that infers a position of the distance measurement signal receiving unit by machine learning on the basis of a pseudo distance to the plurality of distance measurement signal output blocks specified from a transmission time that is a time until the distance measurement signals of the plurality of distance measurement signal output blocks are transmitted to and received by the distance measurement signal receiving unit, and known positions of the plurality of distance measurement signal output blocks.

<17> An information processing method of an information processing apparatus, the information processing apparatus including:

a distance measurement signal receiving unit that receives a distance measurement signal including a spreading code signal obtained by performing spread spectrum modulation on a spreading code and output from a plurality of distance measurement signal output blocks existing at known positions; and

a position inference unit that infers a position of the distance measurement signal receiving unit by machine learning on the basis of a pseudo distance to the plurality of distance measurement signal output blocks specified from a transmission time that is a time until the distance measurement signals of the plurality of distance measurement signal output blocks are transmitted to and received by the distance measurement signal receiving unit, and known positions of the plurality of distance measurement signal output blocks,

the information processing method including a step of, by the position inference unit, inferring the position of the distance measurement signal receiving unit by the machine learning on the basis of the pseudo distance and the known positions of the plurality of distance measurement signal output blocks.

REFERENCE SIGNS LIST

| 11 | Acoustic positioning system |
| 31, 31-1 to 31-4 | Audio output block |
| 32 | Electronic device |
| 41 | Audio input block |
| 42 | Control unit |
| 43 | Communication unit |
| 51, 51-1 to 51-4 | Audio input unit |
| 71 | Spreading code generation unit |
| 72 | Known music sound source generation unit |
| 73 | Audio generation unit |
| 74 | Audio output unit |
| 81 | Spreading unit |
| 82 | Frequency shift processing unit |
| 83 | Sound field control unit |
| 91 | Known music sound source removal unit |
| 92 | Spatial transmission characteristic calculation unit |
| 93 | Transmission time calculation unit |
| 94 | Pseudo distance calculation unit |
| 95 | Position inference unit |
| 130 | Inverse shift processing unit |
| 131 | Cross-correlation calculation unit |
| 132 | Peak detection unit |
| 201 | Learning device |
| 211 | Position simulator |
| 212 | Noise imparting unit |
| 213 | Position inference unit |
| 221 | Electronic device position output unit |
| 222 | Audio output block position output unit |
| 223 | Simulation distance calculation unit |

**Claims**

1. A program for causing a computer to function as:

   a distance measurement signal receiving unit that receives a distance measurement signal including a spreading code signal obtained by performing spread spectrum modulation on a spreading code and output from a plurality of distance measurement signal output blocks existing at known positions; and
   a position inference unit that infers a position of the distance measurement signal receiving unit by machine learning on a basis of a pseudo distance to the plurality of distance measurement signal output blocks specified from a transmission time that is a time until the distance measurement signals of the plurality of distance measurement signal output blocks are transmitted to and received by the distance measurement signal receiving unit, and known positions of the plurality of distance measurement signal output blocks.

2. The program according to claim 1, wherein
   the position inference unit performs the machine learning using a data set based on a simulation distance that is a true value of a distance between the distance measurement signal receiving unit and each of the plurality of distance measurement signal output blocks.

**3.** The program according to claim 2, wherein
the simulation distance is a true value of a distance between a simulation position of the distance measurement signal receiving unit and a simulation position of each of the plurality of distance measurement signal output blocks, the simulation position being generated by simulation and being randomly set in a predetermined space.

**4.** The program according to claim 3, wherein
the position inference unit performs the machine learning using a data set including a simulation pseudo distance generated by imparting noise assumed in transmission and reception of the distance measurement signal to the simulation distance.

**5.** The program according to claim 4, wherein
the position inference unit includes a deep neural network (DNN), and the machine learning is performed to infer the position of the distance measurement signal receiving unit on a basis of the pseudo distance and known positions of the plurality of distance measurement signal output blocks using a data set including the simulation pseudo distance generated on a basis of the simulation distance, the simulation position of the corresponding distance measurement signal receiving unit, and the simulation position of each of the plurality of distance measurement signal output blocks.

**6.** The program according to claim 4, wherein
the simulation pseudo distance is generated by imparting pseudo random noise corresponding to noise assumed in transmission and reception of the distance measurement signal to the simulation distance.

**7.** The program according to claim 6, wherein
the simulation pseudo distance is generated when the pseudo random noise simulating noise of at least one of an observation error, a multipath error, a non line of sight (NLOS) error, and an error in audio emission timing of the plurality of distance measurement signal output blocks, which are assumed in transmission and reception of the distance measurement signal, is imparted to the simulation distance.

**8.** The program according to claim 7, wherein
the simulation pseudo distance is generated by imparting Gaussian noise or uniformly distributed noise simulating the observation error assumed in transmission and reception of the distance measurement signal to the simulation distance.

**9.** The program according to claim 7, wherein
the simulation pseudo distance is generated by imparting uniform distribution noise simulating the multipath error assumed in transmission and reception of the distance measurement signal to the simulation distance.

**10.** The program according to claim 7, wherein
the simulation pseudo distance is generated by imparting uniform distribution noise simulating the NLOS error assumed in transmission and reception of the distance measurement signal to the simulation distance.

**11.** The program according to claim 7, wherein
the simulation pseudo distance is generated by imparting Gaussian noise or uniform distribution noise simulating an error of an audio emission timing of the plurality of distance measurement signal output blocks assumed in transmission and reception of the distance measurement signal to the simulation distance.

**12.** The program according to claim 1, further comprising:

a transmission time calculation unit that calculates the transmission time until each of the distance measurement signals of the plurality of distance measurement signal output blocks is transmitted to the distance measurement signal receiving unit; and
a pseudo distance calculation unit that calculates the pseudo distance of each of the plurality of distance measurement signal output blocks from the transmission time of each of the distance measurement signals of the plurality of distance measurement signal output blocks, wherein
the position inference unit infers the position of the distance measurement signal receiving unit by the machine learning on a basis of the known positions of the plurality of distance measurement signal output blocks and the pseudo distances of the plurality of distance measurement signal output blocks.

**13.** The program according to claim 12, wherein

the transmission time calculation unit includes:

a cross-correlation calculation unit that calculates cross-correlation between a spreading code signal in the distance measurement signal received by the distance measurement signal receiving unit and a spreading code signal of the distance measurement signal output from the plurality of distance measurement signal output blocks; and

a peak detection unit that detects a peak time in the cross-correlation as the transmission time,

the pseudo distance calculation unit calculates the pseudo distance of each of the plurality of distance measurement signal output blocks from the transmission time of each of the distance measurement signals of the plurality of distance measurement signal output blocks, and

the position inference unit infers the position of the distance measurement signal receiving unit by the machine learning on a basis of the pseudo distances to the plurality of distance measurement signal output blocks and the known positions of the plurality of distance measurement signal output blocks.

**14.** The program according to claim 1, wherein

the distance measurement signal receiving unit is provided on a smartphone or a head mounted display (HMD).

**15.** The program according to claim 1, wherein

the distance measurement signal includes an audio signal, a radio wave signal, and an optical signal.

**16.** An information processing apparatus comprising:

a distance measurement signal receiving unit that receives a distance measurement signal including a spreading code signal obtained by performing spread spectrum modulation on a spreading code and output from a plurality of distance measurement signal output blocks existing at known positions; and

a position inference unit that infers a position of the distance measurement signal receiving unit by machine learning on a basis of a pseudo distance to the plurality of distance measurement signal output blocks specified from a transmission time that is a time until the distance measurement signals of the plurality of distance measurement signal output blocks are transmitted to and received by the distance measurement signal receiving unit, and known positions of the plurality of distance measurement signal output blocks.

**17.** An information processing method of an information processing apparatus, the information processing apparatus including:

a distance measurement signal receiving unit that receives a distance measurement signal including a spreading code signal obtained by performing spread spectrum modulation on a spreading code and output from a plurality of distance measurement signal output blocks existing at known positions; and

a position inference unit that infers a position of the distance measurement signal receiving unit by machine learning on a basis of a pseudo distance to the plurality of distance measurement signal output blocks specified from a transmission time that is a time until the distance measurement signals of the plurality of distance measurement signal output blocks are transmitted to and received by the distance measurement signal receiving unit, and known positions of the plurality of distance measurement signal output blocks,

the information processing method comprising a step of, by the position inference unit, inferring the position of the distance measurement signal receiving unit by the machine learning on a basis of the pseudo distance and the known positions of the plurality of distance measurement signal output blocks.

# FIG. 1

AUDIO OUTPUT BLOCK 31-1

AUDIO OUTPUT BLOCK 31-2

11

32

ELECTRONIC DEVICE

MOVE

AUDIO OUTPUT BLOCK 31-3

AUDIO OUTPUT BLOCK 31-4

32

ELECTRONIC DEVICE

41

AUDIO INPUT BLOCK

51

AUDIO INPUT UNIT

52

POSITION DETECTION UNIT

## FIG. 2

AUDIO OUTPUT BLOCK 31-1

31-2
31-3
31-4

SPREADING CODE GENERATION UNIT 71

KNOWN MUSIC SOUND SOURCE GENERATION UNIT 72

AUDIO GENERATION UNIT 73

SPREADING UNIT 81

FREQUENCY SHIFT PROCESSING UNIT 82

SOUND FIELD CONTROL UNIT 83

COMMUNICATION UNIT 75

AUDIO OUTPUT UNIT 74

ELECTRONIC DEVICE

EP 4 700 422 A1

FIG. 3

EP 4 700 422 A1

# FIG. 4

EP 4 700 422 A1

# FIG. 5

FIG. 6

# FIG. 7

73

AUDIO GENERATION UNIT

81

SPREADING UNIT

82

FREQUENCY SHIFT
PROCESSING UNIT

74

51

91

KNOWN MUSIC
SOUND SOURCE
REMOVAL UNIT

CROSS-CORRELATION
CALCULATION UNIT
(DESPREADING)

INVERSE SHIFT
PROCESSING UNIT

131

130

PEAK DETECTION
UNIT

132

TRANSMISSION TIME CALCULATION UNIT

93

TRANSMISSION TIME

27

# FIG. 8

(X2,Y2,Z2)

(X1,Y1,Z1)

31-2

31-1

(x1,y1,z1)

mic

41-1

51-1

(x2,y2,z2)

mic

51-2

31-3

41-2

(X3,Y3,Z3)

31-4

(X4,Y4,Z4)

# FIG. 9

FIG. 10

EP 4 700 422 A1

# FIG. 11

LEARNING DEVICE

POSITION INFERENCE UNIT
LEARNING PROCESSING START

S11

OUTPUT SIMULATION POSITION OF ELECTRONIC DEVICE

S12

OUTPUT SIMULATION POSITION OF AUDIO OUTPUT BLOCK

S13

CALCULATE SIMULATION DISTANCE BETWEEN ELECTRONIC DEVICE AND AUDIO OUTPUT BLOCK

S14

APPLY NOISE TO SIMULATION DISTANCE AND GENERATE SIMULATION PSEUDO DISTANCE

S15

CAUSE POSITION INFERENCE UNIT THAT INFERS POSITION OF ELECTRONIC DEVICE
ON BASIS OF PSEUDO DISTANCE AND POSITION OF EACH OF AUDIO OUTPUT BLOCKS
TO LEARN ON BASIS OF DATASET INCLUDING SIMULATION PSEUDO DISTANCE,
SIMULATION POSITION OF EACH OF AUDIO OUTPUT BLOCKS,
AND SIMULATION POSITION OF ELECTRONIC DEVICE

END

# FIG. 12

ELECTRONIC DEVICE

( POSITION MEASUREMENT PROCESSING START )

No ⟨ HAS INSTRUCTION TO START POSITION MEASUREMENT PROCESSING BEEN GIVEN? ⟩ S31

Yes

REQUEST START OF POSITION MEASUREMENT PROCESSING    S32

ACQUIRE POSITION INFORMATION OF AUDIO OUTPUT BLOCK    S33

REQUEST EMISSION OF AUDIO    S34

COLLECT SOUND    S35

CALCULATE SPATIAL TRANSMISSION CHARACTERISTIC    S36

GENERATE REVERSED-PHASE SIGNAL OF MUSIC AND REMOVE KNOWN MUSIC SOUND SOURCE    S37

TRANSMISSION TIME CALCULATION PROCESSING    S38

CALCULATE PSEUDO DISTANCE BETWEEN ELECTRONIC DEVICE AND AUDIO OUTPUT BLOCK    S39

INFER POSITION OF ELECTRONIC DEVICE ON BASIS OF PSEUDO DISTANCE BETWEEN ELECTRONIC DEVICE AND AUDIO OUTPUT BLOCK    S40

EXECUTE PROCESSING ACCORDING TO INFERRED POSITION    S41

( END )

# FIG. 13

AUDIO OUTPUT BLOCK

( POSITION MEASUREMENT
PROCESSING START )

S51
HAS START OF POSITION MEASUREMENT
PROCESSING BEEN REQUESTED?
No

Yes

S52
GIVE NOTIFICATION OF START OF POSITION
MEASUREMENT PROCESSING AND TRANSMIT POSITION
INFORMATION OF AUDIO OUTPUT BLOCK

S53
HAS EMISSION OF AUDIO BEEN REQUESTED?
No

Yes

S54
GENERATE SPREADING CODE

S55
GENERATE KNOWN MUSIC SOUND SOURCE

S56
PERFORM SPREAD SPECTRUM WITH SPREADING CODE

S57
PERFORM FREQUENCY SHIFT PROCESSING
FOR EACH SPEAKER

S58
EMIT KNOWN MUSIC SOUND SOURCE AND AUDIO OF
SPREADING CODE SIGNAL FOR EACH SPEAKER

( END )

# FIG. 14

```
┌─────────────────────────────────┐
│  TRANSMISSION TIME CALCULATION  │
│       PROCESSING START          │
└─────────────────────────────────┘
                │
                ▼            S71
┌─────────────────────────────────┐
│    INVERSELY SHIFT FREQUENCY    │
└─────────────────────────────────┘
                │
                ▼            S72
┌─────────────────────────────────┐
│    CALCULATE CROSS-CORRELATION  │
└─────────────────────────────────┘
                │
                ▼            S73
┌─────────────────────────────────┐
│       DETECT PEAK POSITION      │
└─────────────────────────────────┘
                │
                ▼            S74
┌─────────────────────────────────┐
│    CALCULATE TRANSMISSION TIME  │
└─────────────────────────────────┘
                │
                ▼
        ┌───────────────┐
        │    RETURN     │
        └───────────────┘
```

## FIG. 15

## INTERNATIONAL SEARCH REPORT

| International application No. |
| --- |
| **PCT/JP2024/013545** |

**A.    CLASSIFICATION OF SUBJECT MATTER**

*G01S 5/14*(2006.01)i; *G06F 3/0346*(2013.01)i; *G06N 20/00*(2019.01)i
FI:    G01S5/14; G06N20/00 130; G06F3/0346 421

According to International Patent Classification (IPC) or to both national classification and IPC

**B.    FIELDS SEARCHED**

Minimum documentation searched (classification system followed by classification symbols)

G01S5/00-5/30; G06F3/0346; G06N20/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| A | WO 2019/181118 A1 (WACOM CO., LTD.) 26 September 2019 (2019-09-26) paragraph [0075] | 1-17 |
| A | JP 05-093773 A (NEC CORPORATION) 16 April 1993 (1993-04-16) entire text, all drawings | 1-17 |
| A | CN 111221011 A (QIANXUN POSITION NETWORK CO., LTD.) 02 June 2020 (2020-06-02) entire text, all drawings | 1-17 |
| A | JP 2019-184408 A (NIDEC CORPORATION) 24 October 2019 (2019-10-24) paragraphs [0097]-[0128] | 1-17 |
| A | WO 2023/026471 A1 (NIPPON TELEGRAPH AND TELEPHONE CORPORATION) 02 March 2023 (2023-03-02) entire text, all drawings | 1-17 |

☐ Further documents are listed in the continuation of Box C.      ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **30 April 2024** | **14 May 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/013545**

| Patent document cited in search report | | | Publication date (day/month/year) | Patent family member(s) | | | Publication date (day/month/year) |
|---|---|---|---|---|---|---|---|
| WO | 2019/181118 | A1 | 26 September 2019 | US 2020/0401245 A1 paragraph [0085] JP 2023-129627 A US 2022/0179506 A1 EP 3770732 A1 CN 111837096 A | | | |
| JP | 05-093773 | A | 16 April 1993 | (Family: none) | | | |
| CN | 111221011 | A | 02 June 2020 | (Family: none) | | | |
| JP | 2019-184408 | A | 24 October 2019 | (Family: none) | | | |
| WO | 2023/026471 | A1 | 02 March 2023 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022163801 A